# EUROPÄISCHE PATENTANMELDUNG

(11) **EP 0 839 963 A2**
(43) Veröffentlichungstag der Anmeldung: **06.05.1998**
(21) Anmeldenummer: 97118580.6
(22) Anmeldetag: 25.10.1997
(51) Int. Cl.: E02B 7/00

(54) **Selbstreinigungseinrichtung für Schleusentoranlagen**

(30) Priorität: 31.10.1996 DE 29618956 U
(71) Anmelder: ABS Pump Center GmbH, 53797 Lohmar (DE)
(72) Erfinder: Dirla, Manfred, 51491 Overath (DE); Kleu, Alfred, 53804 Much (DE); Reinert, Patrick, 25451 Quickborn (DE)
(74) Vertreter: Kierdorf, Theodor, Dipl.-Ing.

(57) **Zusammenfassung**

Schleusentoranlagen in Schleusenkammern als Wasserbauwerke wurden bislang mit aufwendigen manuellen Verfahren sedimentations- und eisfrei gehalten. Die Erfindung betrifft eine Selbstreinigungseinrichtung für Schleusentoranlagen sowie ein Verfahren zur kontinuierlichen Reinigung von Schleusentoranlagen oder dergleichen beweglichen Einbauteilen in Schleusenkammern. Erfindungsgemäß ist vorgesehen, daß mittels einer an sich bekannten Strömungsmaschine (7) eine gerichtete Wasserströmung erzeugt wird, die die Verschiebe- oder Verschwenkbereiche (4) wenigstens eines Schleusentors (1) frei von Sedimentationen und Eis hält.

## Beschreibung

Die Erfindung betrifft eine Selbstreinigungseinrichtung für Schleusenkammern oder dergleichen als Wasserbauwerke, insbesondere für Schleusentoranlagen.

Schleusentoranlagen in Wasserstraßen oder in Häfen oder sonstigen Wasserbauwerken lassen sich nicht immer problemlos öffnen und schließen. Oftmals lagern sich an Schleusentoren Sand, Schlick, Splitt oder sonstige Verunreinigungen an. Insbesondere in dem Raum zwischen den jeweils geöffneten Torflügeln und der Schleusenwand sammeln sich häufig Sedimentationen an. Auch können sich dort Eisschollen oder eine geschlossene Eisdecke bilden.

Der Eisbildung begegnete man bisher mit dem Einblasen von Druckluft in das Schleusenbecken. Durch das Einblasen von Luft lassen sich vorhandene Eisschollen abtreiben, jedoch ist diese Maßnahme mit einem hohen Energieeinsatz verbunden, da ja bekanntermaßen die Erzeugung von Druckluft energetisch recht aufwendig ist. Sedimentationen auf der Schleusenkammersohle oder in den Schleusentornischen wurden bislang manuell mit Tauchern entfernt. Auch diese Vorgehensweise ist recht aufwendig.

Aufgabe der Erfindung ist es daher, eine Selbstreinigungseinrichtung für Schleusentoranlagen zu schaffen, mit welcher mit verhältnismäßig geringem Aufwand die Schleusentoranlage sedimentations- und eisfrei gehalten werden kann.

Es ist weiterhin Aufgabe der Erfindung, ein entsprechendes Verfahren zur Verfügung zu stellen.

Die Aufgabe wird gemäß der Erfindung gelöst durch eine Selbstreinigungseinrichtung für Schleusenkammern oder dergleichen als Wasserbauwerke, insbesondere für Schleusentoranlagen, mit wenigstens einer in der Schleusenkammer angeordneten an sich bekannten Strömungsmaschine, die so angeordnet und ausgerichtet ist, daß wenigstens ein Teil der erzeugten Wasserströmung wenigstens einen Teil des Verschiebe- oder Verschwenkbereichs wenigstens eines Schleusentorflügels oder dergleichen beweglichen Einbauteils bestreicht.

Mittels der Strömungsmaschine wird eine gerichtete Wasserströmung erzeugt, die eine ausreichende Geschwindigkeit zum Abtransport von Feststoffen besitzt. Bei geeigneter Anordnung der Strömungsmaschine entstehen neben den horizontalen Wasserströmungen auch vertikale Teilströmungen, die wärmeres Tiefenwasser an die eisbildungsgefährdete Wasseroberfläche fördern und so die Bildung von geschlossenen Eisdecken bzw. Eisschollen verhindern. Hierdurch wird auch die Gefahr von Störungen verringert, die durch zwischen den Schleusentoren eingeklemmte Fremdkörper verursacht werden. Die erfindungsgemäße Selbstreinigungseinrichtung eignet sich insbesondere für Schleusenanlagen für Tore mit senkrechter Drehachse, beispielsweise für Schleusensektortore und Schleusenstemmtore. Die Erfindung ist jedoch nicht auf die Anwendung für derartige Tore beschränkt. Beispielsweise können auch Drempelanschläge für Schleusentore mit der Selbstreinigungseinrichtung sedimentfrei gehalten werden.

Eine bevorzugte Ausbildung der Selbstreinigungseinrichtung ist insbesondere für Schleusenanlagen mit Schleusenstemmtoren geeignet. Diese zeichnet sich dadurch aus, daß die Strömungsmaschine so ausgerichtet ist, daß mit dieser der Bereich zwischen einem geöffneten Torflügel und der Schleusenwandung bestreichbar ist. Dieser bei geöffneten Türflügeln besonders für sedimentäre Anlagerungen gefährdete Bereich mit einer naturgemäß geringen Wasserströmung kann so zuverlässig frei von Sedimentationen gehalten werden.

Vorzugsweise ist die Strömungsmaschine in einem Rücksprung oder einem Strömungskanal der Schleusenwandung angeordnet.

Zweckmäßigerweise ist die Selbstreinigungseinrichtung in der Schleusentornische der Schleusenwandung angeordnet, wobei die Schleusentornische in Richtung auf die Schleusenkammersohle zu einem Strömungskanal erweitert ist.

Nach einem Ausführungsbeispiel der Erfindung ist die Strömungsmaschine auf dem durch die Schleusentornische mit der Schleusentorwandung gebildeten Absatz verankert und wird bei geöffnetem Schleusentor von dem betreffenden Torflügel verdeckt. Hierdurch ist auch gewährleistet, daß die Strömungsmaschine den Strömungsquerschnitt der Schleusenkammer nicht beeinträchtigt bzw. nicht in diesen hineinragt. Dies gewährleistet zudem eine geschützte Anordnung der Strömungsmaschine.

Bei einer anderen Ausführungsform der Erfindung ist vorgesehen, daß die Strömungsmaschine wenigstens in einer Ebene schwenkbar gelagert ist und daß die Schwenkbewegung in wenigstens einer Ebene an die Schwenkbewegung eines Schleusentorflügels gekoppelt ist. Die Erfindung wird damit dem Bedürfnis gerecht, eine Eis- und Sedimentbildung sowohl bei geschlossenem als auch bei geöffnetem Schleusentor zu gewährleisten. Ein Ausschwenken der Schleusentore in die geschlossene Stellung kann beispielsweise ein gleichzeitiges Mitschwenken einer oder mehrerer Strömungsmaschinen bewirken, die dabei eine in etwa parallele Ausrichtung zu den Schleusentoren beibehalten können und so beispielsweise eine Eisbildung im Bereich des Anschlags der Schleusenstemmtore aneinander verhindern können. Eine solche Anordnung der Selbstreinigungseinrichtung ist insbesondere bei Schleusen mit Schleusenstemmtoren sinnvoll. So können auch die Drempelanschläge der Schleusentore zuverlässig sedimentfrei gehalten werden.

Vorzugsweise ist die Strömungsmaschine um eine vertikale, sich parallel zur Drehachse des oder der Schleusentorflügel erstreckenden Drehachse schwenkbar.

Zweckmäßigerweise ist auch der Neigungswinkel der Strömungsmaschine in Einbaulage in bezug auf die Horizontale verstellbar, vorzugsweise ebenfalls durch die Öffnungs- und Schließbewegung eines Schleusentorflügels. Bei geöffnetem Schleusentor kann beispielsweise eine horizontale Ausrichtung der Strömungsmaschine zur Erzeugung einer horizontalen Strömung in der Schleusentornische wünschenswert sein. Bei geschlossenem Schleusentor kann es wünschenswert sein, die Strömungsmaschine geneigt in bezug auf die Horizontale auszurichten, um überwiegend vertikale Wasserströmungen zu erzeugen, die wärmeres Tiefenwasser an die eisbildungsgefährdete Wasseroberfläche fördern.

Zweckmäßigerweise ist die Strömungsmaschine an einem sich vertikal erstreckenden, an der Schleusenwandung gehaltenen Führungsrohr befestigt.

Das Führungsrohr kann in einer Halteschiene vertikal verschiebbar und wenigstens in einer vertikalen Stellung um seine Längsachse schwenkbar angeordnet sein.

Eine vorteilhafte Ausführungsform der Erfindung sieht vor, daß die Halteschiene als C-Profil ausgebildet ist. Eine solche Profilierung der Halteschiene bietet die einfachste Möglichkeit, der vertikal verschieblichen und drehbaren Lagerung des Führungsrohrs.

In dem Führungsrohr können beispielsweise elektrische Zuleitungen und Betätigungselemente bzw. Betätigungsorgane zur Vollziehung der Schwenkbewegung der Strömungsmaschine geschützt gegen Eisgang untergebracht sein.

Zweckmäßigerweise ist an dem Führungsrohr eine sich in Einbaulage in etwa horizontal erstreckende Schwenkhalterung für die Strömungsmaschine vorgesehen.

Das Führungsrohr kann beispielsweise über ein Zweigelenkgetriebe als Betätigungsorgan mit dem Schleusentor gekoppelt sein. Der Neigungswinkel der Strömungsmaschine kann über einen Seilzug verstellbar sein, der zusammen mit den elektrischen Leitungen für die Strömungsmaschine durch das Führungsrohr verlegt ist.

In Weiterbildung der Erfindung ist vorgesehen, daß die Strömungsmaschine als an sich bekanntes Tauchmotorrührwerk ausgebildet ist.

Die Propellerachse eines solchen Tauchmotorrührwerks kann beispielsweise in Richtung des in der Schleusentornische ausgebildeten Strömungskanals ausgerichtet sein. So kann fortlaufend eine Längsströmung im Bereich des Tor-Mauerzwischenraums aufrecht erhalten werden, der eine ausreichende Längsgeschwindigkeit zum Abtransport von Feststoffen aufweist. Bei fester, d. h. nicht schwenkbarer, Befestigung des Rührwerks auf dem unteren Absatz der Schleusentornische ist immer eine ausreichende Strömung zwischen der Schleusentorunterseite des geöffneten Schleusentors und diesem Absatz gewährleistet, welcher Bereich ansonsten für Reinigungsarbeiten schwer zugänglich ist.

Bei schwenkbarer Anordnung des Tauchmotorrührwerks, insbesondere bei dessen Kopplung an die Öffnungs- und Schließbewegung eines oder mehrerer Schleusentore, kann wahlweise die Schleusentornische bzw. ein darin ausgebildeter Strömungskanal mit einer Längsströmung oder der Bereich des Drempelanschlags der Schleusentore bei geschlossenem Zustand der Schleusentore mit einer Vertikalströmung beaufschlagt werden.

Es können grundsätzlich Tauchmotorrührwerke Anwendung finden, die aus der Klärwerkstechnik bekannt sind und normalerweise in Misch- und Belebungsbecken zum Aufwirbeln von Sedimentationen und zum Aufbrechen von Schwimmdecken verwendet werden.

Ein wesentlicher Gesichtspunkt der Erfindung ist, daß im Verschiebe- oder Verschwenkbereich wenigstens eines Schleusentors oder dergleichen beweglichen Einbauteils einer Schleusenanlage eine gerichtete Wasserströmung erzeugt wird, die diesen Bereich frei von Sedimentationen und Eis hält.

Die Erzeugung der gerichteten Wasserströmung kann kontinuierlich erfolgen, es können jedoch auch in vorgegebenen Zeitintervallen Wasserströmungen erzeugt werden.

Die Erfindung wird nachstehend anhand eines in den Zeichnungen dargestellten Ausführungsbeispiels erläutert werden.

Es zeigen die
- Fig. 1: eine Vorderansicht eines geöffneten und in die Schleusentornische eingeschwenkten Schleusentors mit einer Selbstreinigungseinrichtung nach einem ersten Ausführungsbeispiel der Erfindung,
- Fig. 2: eine schematische Schnittansicht durch die Schleusenwandung und das Schleusentor aus Fig. 1,
- Fig. 3: eine Draufsicht auf das in die Schleusentornische eingeschwenkte Schleusentor mit der zwischen Schleusenwandung und Schleusentor angeordneten Strömungsmaschine, wobei die gezeigte Anordnung die erfindungsgemäße Selbstreinigungseinrichtung nach dem ersten Ausführungsbeispiel der Erfindung verkörpert,
- Fig. 4: eine Draufsicht auf ein geöffnetes Schleusentor mit einer anderen Ausführungsform der Selbstreinigungseinrichtung gemäß der Erfindung,
- Fig. 5: eine Draufsicht auf die untere Halterung des in Fig. 4 dargestellten Tauchmotorrührwerks und
- Fig. 6: eine Ansicht der in den Fig. 4 und 5 dargestellten Selbstreinigungseinrichtung bei geschlossenem Schleusentor als Querschnitt durch die Schleuse.

Der in den Figuren dargestellte Schleusentorflügel 1 ist Bestandteil einer Schleusenanlage mit Schleusenstemmtoren. Wie bereits eingangs schon erwähnt, soll die Erfindung jedoch nicht auf solche Schleusentoranlagen beschränkt sein.

Der mit 1 bezeichnete Schleusentorflügel ist mittels Angeln 2, die die senkrechte Drehachse des Schleusentorflügels bilden, am Mauerwerk der Schleusenwandung 3 drehbar befestigt.

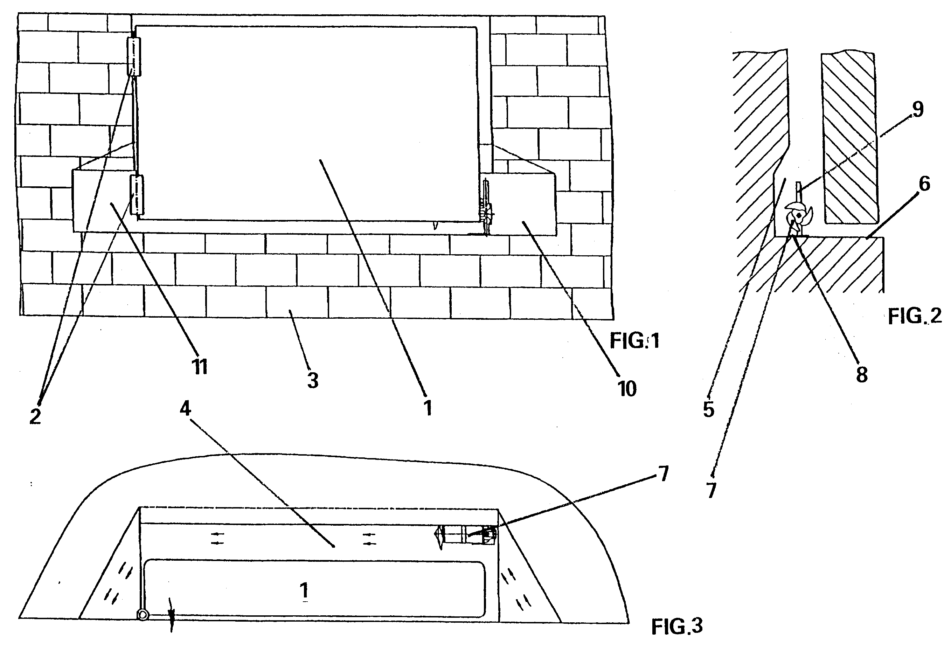

Wie insbesondere der Draufsicht in Fig. 1 zu entnehmen ist, ist die Schleusentornische 4 so bemessen, daß zwischen der Schleusenwandung 3 und dem geöffneten Schleusentorflügel 1 ausreichend Platz ist. Die Schleusentornische 4 erweitert sich nach unten in Richtung auf die Schleusenkammersohle 15 zu einem Strömungskanal 5.

Auf dem durch die Schleusentornische 4 bzw. den Strömungskanal 5 mit der Schleusenwandung 3 gebildeten Absatz 6 ist ein an sich bekanntes Tauchmotorrührwerk 7 angeordnet. Das Tauchmotorrührwerk 7 ist auf einem ebenfalls bekannten Sockel 8 mit Führungsrohr 9 befestigt. Die Propellerachse des Tauchmotorrührwerks 7 ist so ausgerichtet, daß das Tauchmotorrührwerk 7 eine Längsströmung in dem zwischen dem Schleusentorflügel 1 und der Schleusenwandung 3 gebildeten Zwischenraum erzeugt. Die durch die Pfeile angedeutete Wasserströmung bewegt sich von der Einlaufseite 10 zur Auslaufseite 11 des Strömungskanals 5. Hierdurch werden zuverlässig Sedimentablagerungen auf dem Absatz 6, insbesondere im Bereich der Unterseite des Schleusentorflügels 1, verhindert. Zudem entsteht eine aufwärts gerichtete Teilströmung, die im oberen Bereich der Schleusentornische eine Eisbildung verhindert, unter anderem da wärmeres Tiefenwasser an die Wasseroberfläche aufsteigt. Oftmals verhindert jedoch bereits die ausreichende Wasserströmung die Bildung einer Eisschicht.

Die bekannten Tauchmotorrührwerke sind für Dauerbetrieb ausgelegt, so daß die auf diese Art und Weise erzeugte Wasserströmung dauerhaft aufrechterhalten werden kann.

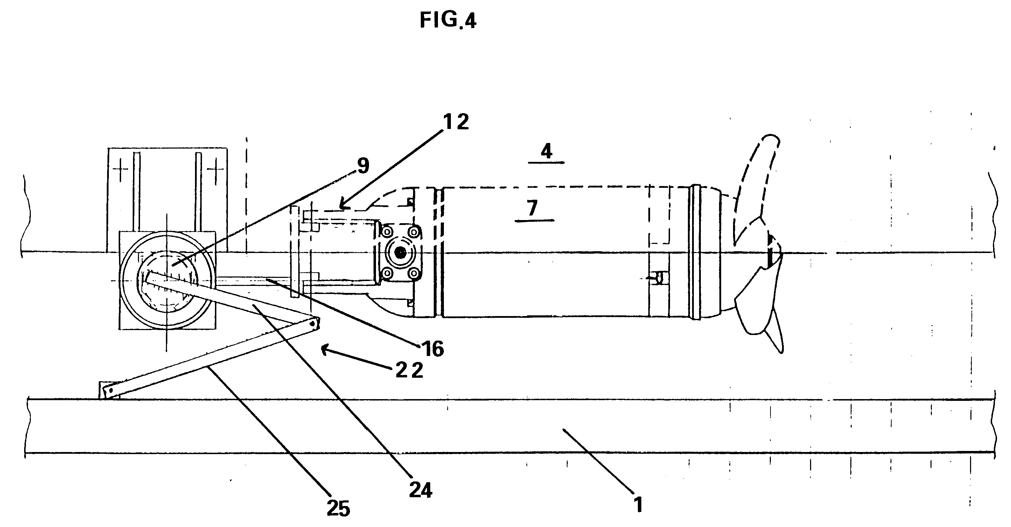

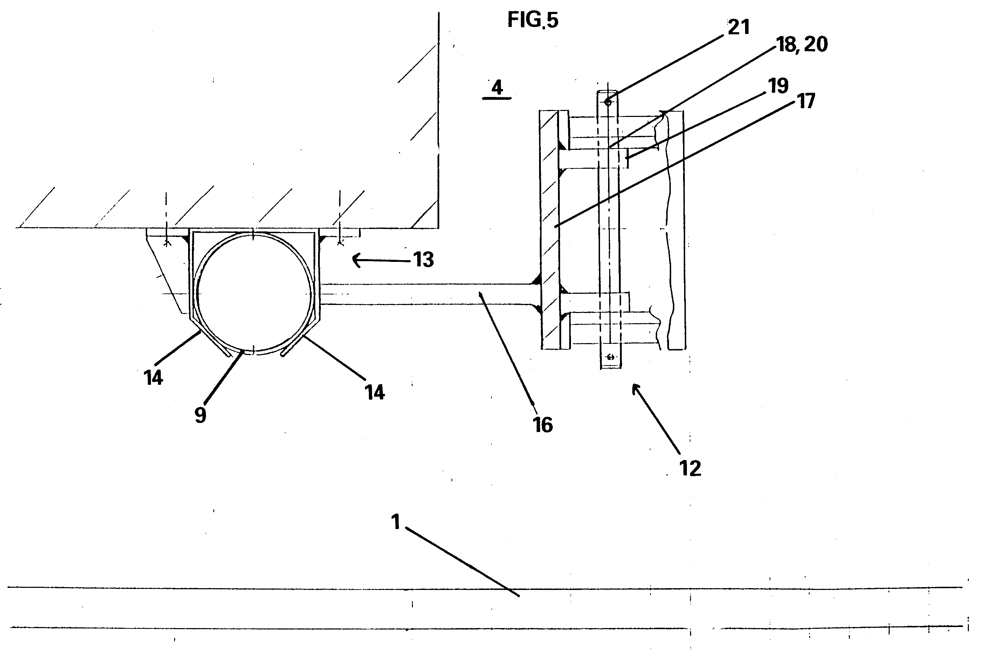

Die Fig. 4 bis 6 zeigen ein zweites Ausführungsbeispiel der erfindungsgemäßen Selbstreinigungseinrichtung. Gleiche oder entsprechende Bauteile sind bei diesem Ausführungsbeispiel mit gleichen Bezugszeichen versehen.

Das zweite Ausführungsbeispiel betrifft eine Selbstreinigungseinrichtung, bei welcher das Tauchmotorrührwerk 7 sowohl in horizontaler Ebene als auch in vertikaler Ebene schwenkbar ist, wobei die Schwenkbewegung des Tauchmotorrührwerks 7 an die Öffnungs- und Schließbewegung des Schleusentorflügels 1 gekoppelt ist. Das Tauchmotorrührwerk 7 ist über eine Schwenkhalterung 12 an dem sich über einen Großteil der Höhe der Schleusenwandung 3 erstreckenden Führungsrohr 9 befestigt. Das Führungsrohr 9 ist vertikal verschieblich und um seine Drehachse schwenkbar in einer an der Schleusenwandung 3 befestigten bzw. in dieser verankerten Halteschiene 13 geführt. Die Halteschiene 13 hat ein C-förmiges Querschnittsprofil, wobei die Schenkel 14 der Halteschiene 13 das Führungsrohr 9 umgreifen.

An dem im eingebauten Zustand der Schleusenkammersohle 15 zugewandten Ende des Führungsrohrs 9 ist ein Befestigungsarm 16 fest mit diesem verbunden, der zusammen mit dem Befestigungsspiegel 17 die Schwenkhalterung 12 für das Tauchmotorrührwerk 7 bildet. An dem Befestigungsspiegel 17 sind mit Bohrungen 18 versehene Haltezungen 19 angeordnet, die den durch die Befestigungsaugen 20 des Tauchmotorrührwerks 7 hindurchgesteckten Sicherungsbolzen 21 aufnehmen. Um diesen Sicherungsbolzen 21 ist das Tauchmotorrührwerk 7 in vertikaler Ebene schwenkbar befestigt, d. h. mit einstellbarem Neigungswinkel in bezug auf die Horizontale.

In den Schenkeln 14 der Halteschiene 13 ist jeweils wenigstens eine in den Zeichnungen nicht dargestellte Ausnehmung vorgesehen, die eine Schwenkbewegung des Führungsrohrs 9 um seine Längsachse und damit ein Ein- bzw. Ausschwenken der Schwenkhalterung 12 aus der Schleusentornische 4 zulassen.

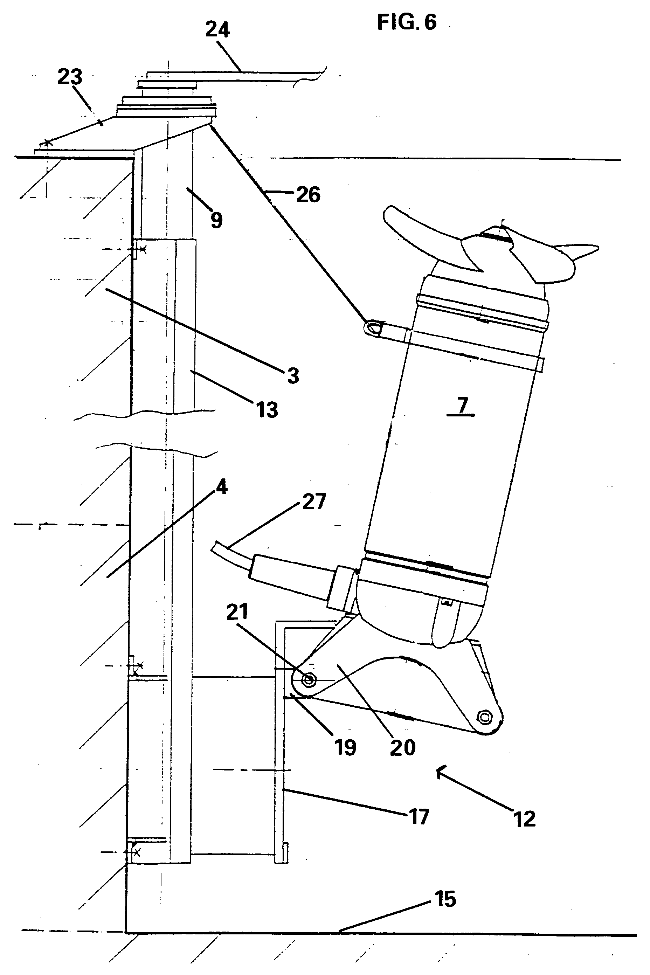

Wie dies in Fig. 4 vollständig und in Fig. 6 teilweise dargestellt ist, ist an dem der Schleusenkammersohle 15 abgewandten Ende des Führungsrohrs 9 ein Zweigelenkgetriebe 22 befestigt, welches an dem Schleusentorflügel 1 angelenkt ist. In diesem Bereich ist das Führungsrohr 9 in einer zusätzlichen Halterung 23 geführt, die am Rand der Schleuse im Boden verankert ist.

Fig. 4 zeigt einen geöffneten, d. h. eingeschwenkten Schleusentorflügel 1, wobei das Tauchmotorrührwerk 7 in die Schleusentornische 4 eingeschwenkt ist und die Propellerachse des Tauchmotorrührwerks 7 in etwa parallel zur Horizontalen ausgerichtet ist. Bei Schließen des Schleusentorflügels 1, d. h. bei Ausschwenken des Schleusentorflügels 1 wird das Tauchmotorrührwerk 7 über das eine Drehung des Führungsrohrs 9 bewirkende Zweigelenkgetriebe 22 verschwenkt. Das Zweigelenkgetriebe 22 besteht aus einem starr mit dem Führungsrohr 9 verschweißten oder anderweitig starr verbundenen Lenker 24 und einem Gelenkhebel 25. Bei Ausschwenken des Schleusentorflügels 1 in die geschlossene Stellung bringt der Gelenkhebel 25 eine Zugkraft auf den Lenker 24 auf und leitet somit die Drehbewegung des Führungsrohrs 9 ein.

Die Einstellung des Neigungswinkels des Tauchmotorrührwerks erfolgt über das Seil 26. Das Seil 26 ist über nicht dargestellte Umlenkrollen so mit dem Schleusentorflügel 1 befestigt, so daß ein Schließen des Schleusentorflügels 1, d. h. ein Ausschwenken, ein Anheben des Tauchmotorrührwerks 7 aus der Lage mit horizontal ausgerichteter Propellerachse in eine nahezu senkrechte Lage, d. h. mit ca. 10° Neigung in bezug auf die Senkrechte, bewirkt wird.

Bei Rückstellen des Tauchmotorrührwerks 7 in die Lage mit horizontal ausgerichteter Propellerachse wirkt der Befestigungsspiegel 17 der Schwenkhalterung 12 als Anschlag, so daß das Seil 26 in dieser Stellung zugentlastet ist. Dies wird konstruktiv dadurch bewirkt, daß die Haltezungen 19 außermittig auf dem Befestigungsspiegel 17 befestigt sind, vorzugsweise an dessen oberen Rand. Sowohl das Seil 26 als auch die elektrischen Leitungen 27 können zum Schutz gegen Eisgang in dem Führungsrohr 9 verlegt sein.

### Bezugszeichenliste

- 1: Schleusentorflügel
- 2: Angeln
- 3: Schleusenwandung
- 4: Schleusentornische
- 5: Strömungskanal
- 6: Absatz
- 7: Tauchmotorrührwerk
- 8: Sockel
- 9: Führungsrohr
- 10: Einlaufseite
- 11: Auslaufseite
- 12: Schwenkhalterung
- 13: Halteschiene
- 14: Schenkel
- 15: Schleusenkammersohle
- 16: Befestigungsarm
- 17: Befestigungsspiegel
- 18: Bohrungen
- 19: Haltezungen
- 20: Befestigungsaugen
- 21: Sicherungsbolzen
- 22: Zweigelenkgetriebe
- 23: Halterung
- 24: Lenker
- 25: Gelenkhebel
- 26: Seil
- 27: elektrische Leitungen

## Patentansprüche

1. Selbstreinigungseinrichtung für Schleusenkammern oder dergleichen als Wasserbauwerke, insbesondere für Schleusentoranlagen, mit wenigstens einer in der Schleusenkammer angeordneten an sich bekannten Strömungsmaschine, die so angeordnet und ausgerichtet ist, daß wenigstens ein Teil der erzeugten Wasserströmung wenigstens einen Teil des Verschiebe- oder Verschwenkbereichs wenigstens eines Schleusentorflügels (1) oder dergleichen beweglichen Einbauteils bestreicht.

2. Selbstreinigungseinrichtung nach Anspruch 1, insbesondere für Schleusenanlagen mit Schleusenstemmtoren, **dadurch gekennzeichnet,** daß die Strömungsmaschine so ausgerichtet ist, daß mit dieser der Bereich zwischen einem geöffneten Schleusentorflügel (1) und der Schleusentorwandung (3) bestreichbar ist.

3. Selbstreinigungseinrichtung nach einem der Ansprüche 1 oder 2, **dadurch gekennzeichnet,** daß die Strömungsmaschine in einem Rücksprung oder Strömungskanal (5) der Schleusenwandung (3) angeordnet ist.

4. Selbstreinigungseinrichtung nach einem der Ansprüche 1 bis 3, **dadurch gekennzeichnet,** daß die Strömungsmaschine in der Schleusentornische (4) der Schleusenwandung (3) angeordnet ist, wobei die Schleusentornische (4) in Richtung auf die Schleusenkammersohle zu einem Strömungskanal (5) erweitert ist.

5. Selbstreinigungseinrichtung nach einem der Ansprüche 1 bis 4, **dadurch gekennzeichnet,** daß die Strömungsmaschine auf dem durch die Schleusentornische (4) mit der Schleusenwandung (5) gebildeten Absatz verankert ist und bei geöffnetem Schleusentor von den betreffenden Schleusentorflügeln (1) verdeckt wird.

6. Selbstreinigungseinrichtung nach einem der Ansprüche 1 bis 5, **dadurch gekennzeichnet,** daß die Strömungsmaschine wenigstens in einer Ebene schwenkbar gelagert ist und daß die Schwenkbewegung in wenigstens einer Ebene an die Schwenkbewegung eines Schleusentorflügels (1) gekoppelt ist.

7. Selbstreinigungseinrichtung nach einem der Ansprüche 1 bis 6, **dadurch gekennzeichnet,** daß die Strömungsmaschine um eine vertikale, sich parallel zur Drehachse der Schleusentorflügel (1) erstreckende Drehachse schwenkbar ist.

8. Selbstreinigungseinrichtung nach einem der Ansprüche 1 bis 7, **dadurch gekennzeichnet,** daß der Neigungswinkel der Strömungsmaschine in Einbaulage in bezug auf die Horizontale verstellbar ist, vorzugsweise durch die Öffnungs- und Schließbewegung eines Schleusentorflügels (1).

9. Selbstreinigungseinrichtung nach einem der Ansprüche 1 bis 8, **dadurch gekennzeichnet,** daß die Strömungsmaschine an einem sich vertikal erstreckenden, an der Schleusenwandung (3) gehaltenen Führungsrohr (9) befestigt ist.

10. Selbstreinigungseinrichtung nach einem der Ansprüche 1 bis 9, **dadurch gekennzeichnet**, daß das Führungsrohr (9) in eine Halteschiene (13) vertikal verschiebbar und wenigstens in einer vertikalen Stellung um seine Längsachse schwenkbar angeordnet ist.

11. Selbstreinigungseinrichtung nach einem der Ansprüche 1 bis 10, **dadurch gekennzeichnet**, daß die Halteschiene (13) als C-Profil ausgebildet ist.

12. Selbstreinigungseinrichtung nach einem der Ansprüche 1 bis 11, **dadurch gekennzeichnet**, daß an dem Führungsrohr (9) eine sich in Einbaulage in etwa horizontal erstreckende Schwenkhalterung (12) vorgesehen ist.

13. Selbstreinigungseinrichtung nach einem der Ansprüche 1 bis 12, **dadurch gekennzeichnet**, daß das Führungsrohr (9) über ein Zweigelenkgetriebe (22) als Betätigungsorgan mit dem Schleusentor gekoppelt ist.

14. Selbstreinigungseinrichtung nach einem der Ansprüche 1 bis 13, **dadurch gekennzeichnet**, daß der Neigungswinkel der Strömungsmaschine über einen Seilzug verstellbar ist.

15. Selbstreinigungseinrichtung nach einem der Ansprüche 1 bis 14, **dadurch gekennzeichnet**, daß die Strömungsmaschine als an sich bekanntes Tauchmotorrührwerk (7) ausgebildet ist.

16. Verfahren zur Reinigung einer Schleusentoranlage, **dadurch gekennzeichnet**, daß im Verschiebe- oder Verschwenkbereich wenigstens eines Schleusentores eine gerichtete Wasserströmung erzeugt wird, die diesen Bereich frei von Sedimentationen und Eis hält.

17. Verfahren nach Anspruch 16, **dadurch gekennzeichnet**, daß die Erzeugung der gerichteten Wasserströmung kontinuierlich erfolgt.

18. Verwendung eines an sich bekannten Tauchmotorrührwerks zur Durchführung des Verfahrens nach einem der Ansprüche 16 oder 17.
